# EUROPEAN PATENT APPLICATION

(11) **EP 0 586 827 A1**
(43) Date of publication of application: **16.03.1994**
(21) Application number: 93111069.6
(22) Date of filing: 10.07.1993
(51) Int. Cl.: H04B 1/38

(54) **Portable radio communication apparatus**

(30) Priority: 10.09.1992 GB 9219143
(71) Applicant: ROKE MANOR RESEARCH LIMITED, Romsey, Hampshire, SO51 0ZN (GB)
(72) Inventor: Trinder, Julian Richard, Wellow, Romsey, Hampshire SO51 6AX (GB)
(74) Representative: Allen, Derek

(57) **Abstract**

A mobile radio transceiver including an r.f. connector (7) by means of which it can be connected to an external antenna, wherein the in-built antenna (4) is capable of being incorporated in the circuit between the external antenna and the transceiving circuits within the transceiver.

## Description

The present invention relates to portable radio communication apparatus and more particularly to such apparatus incorporating a built-in antenna for hand held portable use and an RF connector which enables the apparatus to be placed in a suitable mounting in a vehicle and then have the benefit of an antenna mounted on the vehicle.

Usually with such apparatus in the vehicle mounted mode it is necessary to arrange for the isolation of the built-in antenna from the transmitting/receiving circuits within the apparatus and its replacement by the antenna associated with the vehicle in which the apparatus is mounted.

The present invention provides portable radio communication apparatus in which this operation is facilitated.

According to the present invention there is provided a portable radio communication apparatus including a built-in antenna and a connector by means of which the apparatus can be connected to an external antenna wherein the built-in antenna is adapted to provide when required a connection between the operative electronic circuits within the apparatus and the connector by means of which the apparatus can be connected to the external antenna.

Preferably the portable radio communication apparatus is a transceiver unit which is adapted to be mountable in a vehicle with which the external antenna is associated.

Preferably the radio communication apparatus is a transmitter/receiver unit operating in the VHF region of the electromagnetic spectrum.

In one embodiment of the invention the built-in antenna is hinged at its base so that it can be folded down when not required and there is provided a retaining device on the casing of the apparatus which is adapted to receive and hold the antenna, the said retaining device being connected to the connector by means of which the apparatus can be connected to the antenna associated with the vehicle. Preferably, in the folded position the in-built antenna lies parallel to an RF ground/counterpoise which forms part of the apparatus. The combination of folded antenna and ground/counterpoise acts as a transmission line the characteristic impedance of which can be made to optimise the matching of the antenna associated with the vehicle to the apparatus.

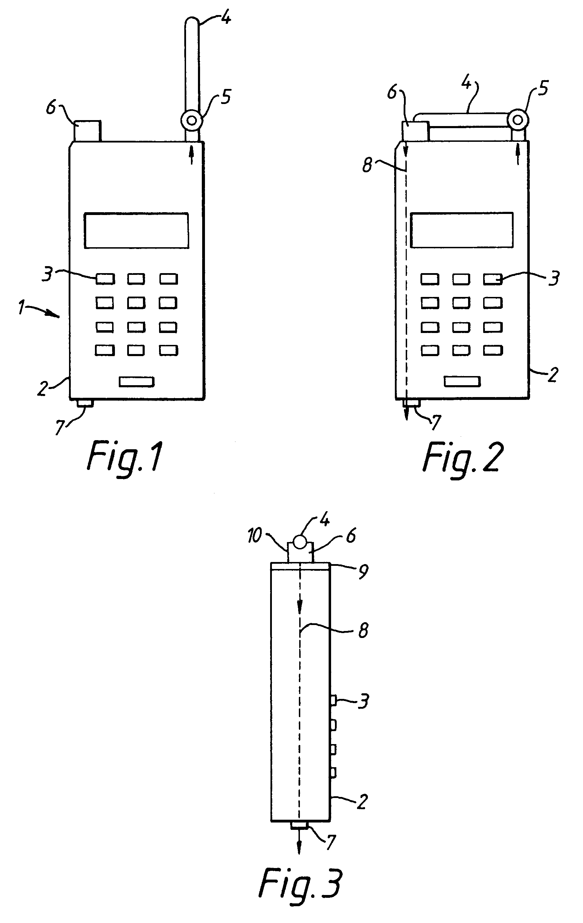

The invention will now be described, by way of example, with reference to the accompanying drawing, in which
Figure 1 is a front view of a portable radio communication apparatus embodying the invention set up for use as a hand-held transceiver,
Figure 2 shows the apparatus of Figure 1 set up for use in a vehicle incorporating an antenna separate to the in-built antenna of the apparatus of Figure 1, and
Figure 3 shows the effective cross-section of the transmission line formed by the in-built antenna in the arrangement shown in Figure 2 in association with a ground/counterpoise included in the invention of Claim 1.

Referring to the drawings, a portable radio communication apparatus in the form of a hand-held transceiver unit 1 consists of a casing 2, which includes the necessary electronic circuits, which are not illustrated, and a key pad 3. Mounted on the top of the casing 2 of the unit 1 is an antenna 4 the length of which is appropriate for the frequency range within which the unit 1 operates. At the base of the antenna 4 is a hinge 5 which allows the antenna 4 to be folded down when the unit 1 is not in use in a hand-held mode. Also on the top of the casing 2 of the unit 1 is a clip 6 which is adapted to receive and hold the antenna 4 when it is in its folded position. The clip 6 is connected to an external antenna RF connector 7 at the bottom of the casing 2 of the unit 1 by means of a microstrip or co-axial line 8 shown dotted, which is incorporated into the casing 2 of the unit 1. Along the top of the casing 2 of the unit 1 is a RF ground/counterpoise 9. In the folded position the antenna 4 and ground/counterpoise 9 form a transmission line 10 which completes the RF circuit between the external antenna connector 7 and the operative part of the unit 1. Thus the unit 1 can be mounted in a vehicle which has an antenna associated with it without the need to isolate the antenna 4 and replace it with a direct connection between the external antenna connector 7 and the operative circuits within the casing 2 of the unit 1.

The characteristic impedance of the transmission line 10 is a function of the diameter of the antenna 4 and its separation from the ground/counterpoise 9. Adjustment of the separation between the antenna 4 and the ground/counterpoise 9 provides a means of matching the external antenna to the unit 1. The necessary adjustment of the separation between the antenna 4 and the ground/counterpoise 9 can be carried out by any convenient means. For example, both the base of the antenna 4 and the clip 6 can be mounted on screw threads with or without lock nuts to maintain the antenna 4 and clip 6 in desired positions, or their mountings can be telescopic with locking devices such as collets or grub screws. When the unit 1 is first installed in any given vehicle an initial matching adjustment can be done using a VSWR meter.

The antenna 4 and the clip 6 can be of metal or have corrosion-resistant metal finishes, but providing that the design is such as to ensure sufficient capacitive coupling exists between the antenna 4 and the clip 6, it is not necessary to provide metal-to-metal contact between the antenna 4 and the clip 6.

## Claims

1. A portable radio communication apparatus including a built-in antenna and a connector by means of which the apparatus can be connected to an external antenna wherein the built-in antenna is adapted to provide when required a connection between the operative electronic circuits within the apparatus and the connector by means of which the apparatus can be connected to the external antenna.

2. A portable radio communication apparatus according to Claim 1 adapted to be mountable in a vehicle with which the external antenna is associated.

3. A portable radio communication apparatus according to Claim 1 or Claim 2 wherein the in-built antenna is hinged at its base and there is provided a retaining device adapted to receive and hold the in-built antenna when folded, the said retaining device being connected to the connector by means of which the apparatus can be connected to the external antenna so that the in-built antenna forms part of the connection between the operative circuits within the apparatus and the external antenna.

4. A portable radio communication apparatus according to Claim 3 wherein there is included a radio frequency ground/counterpoise so positioned as to form in association with the in-built antenna in its folded position a transmission line.

5. A portable radio communication apparatus according to Claim 4 wherein there is included means for adjusting the characteristic impedance of the said transmission line thereby to optimise the matching of the external antenna to the operative circuits within the apparatus.

6. A portable radio communication apparatus according to Claim 5 wherein the separation between the folded down in-built antenna and the ground/counterpoise can be varied to alter the characteristic impedance of the said transmission line.

7. A radio communication apparatus according to Claim 6 wherein the base of the in-built antenna and/or the retaining device are adjustable so as to enable the separation between the folded in-built antenna and the ground/counterpoise to be varied to alter the characteristic impedance of the said transmission line.

8. A radio communication apparatus according to any preceding Claim wherein at least the surfaces of the in-built antenna and the retaining device are of metal thereby to facilitate electrical connection between them.

9. A radio communication apparatus according to any of Claims 1 to 7 wherein the folded-down in-built antenna and retaining device are adapted to provide sufficient capacitive coupling to provide efficient radio-frequency contact between them.
